# EUROPEAN PATENT APPLICATION

(11) **EP 4 663 492 A1**
(43) Date of publication of application: **17.12.2025**
(21) Application number: 24753086.8
(22) Date of filing: 18.01.2024
(51) Int. Cl.: B60T 13/74, B60T 7/12

(54) **WORK VEHICLE**

(30) Priority: 06.02.2023 JP 2023015937
(71) Applicant: Iseki & Co., Ltd., Matsuyama-shi, Ehime 799-2692 (JP)
(72) Inventor: SUZUKI, Hiroto, Iyo-gun, Ehime 791-2111 (JP); WATANABE, Tomoaki, Iyo-gun, Ehime 791-2111 (JP); MASUDA, Ryutaro, Iyo-gun, Ehime 791-2111 (JP); MIYAKE, Koki, Iyo-gun, Ehime 791-2111 (JP)
(74) Representative: TBK
(86) International application number: PCT/JP2024/001334
(87) International publication number: WO 2024/166640

(57) **Abstract**

[Problem] Provided is a work vehicle capable of improving safety by applying a brake by an auto-parking function at an appropriate timing to be brought into a hold state.

[Solution] A work vehicle includes: a traveling wheel and a work machine; a brake mechanism capable of braking the traveling wheel by an activation of an electric actuator; and a control device controlling the activation of the electric actuator, wherein the control device controls the electric actuator to bring the work vehicle into an auto-braking state in which the traveling wheel is maintained in a braked state when an automatic brake engagement condition is satisfied and to release braking of the traveling wheel in the auto-braking state when an automatic brake release condition is satisfied, the brake mechanism is coupled to a fore-and-aft advance/retreat rod configured to advance and retreat in response to operation of a brake pedal, with a fore-and-aft direction defined as a longitudinal direction, and switches between activation and deactivation of a brake in conjunction with a pulling operation by advancing and retreating the fore-and-aft advance/retreat rod, and an electric cylinder being the electric actuator is coupled to the fore-and-aft advance/retreat rod, and when the electric cylinder expands and contracts, the fore-and-aft advance/retreat rod is advanced and retreated to perform automatic brake engagement or automatic brake release regardless of the operation of the brake pedal.

## Description

### TECHNICAL FIELD

The present invention relates to a work vehicle that performs work such as lawn mowing.

### BACKGROUND ART

In the related art, for example, as described in the following Patent Document 1, there is known a work vehicle having an auto-parking function of applying a braking force to a wheel and applying a brake to bring the vehicle into a hold state regardless of an operation of a brake pedal by an operator.

Further, for example, as described in the following Patent Document 2, there is known a technique in which an auto-parking function of applying a braking force to a wheel by controlling an electric actuator is provided, and when a predetermined condition is satisfied from a hold state of a brake, the hold state is automatically released.

### PRIOR ART DOCUMENT

### PATENT DOCUMENT

Patent Document 1: Japanese Unexamined Patent Application Publication No. 2021-102978
Patent Document 2: WO 2018/025290

### SUMMARY OF INVENTION

### TECHNICAL PROBLEM

However, during work traveling by a work vehicle, for example, there are many opportunities to temporarily stop the traveling, such as discarding of weeds collected by a grass mower or a break of an operator. Therefore, in such a case, it is preferable to bring the brake into the hold state by the auto-parking function at an appropriate timing, and there is room for improvement from the viewpoint of safety.

Therefore, an object of the present invention is to provide a work vehicle that can solve such a problem and improve safety by applying a brake and bringing the vehicle into a hold state at an appropriate timing by an auto-parking function.

### SOLUTION TO PROBLEM

In order to achieve the above object, a first invention provides a work vehicle including: a traveling wheel and a work machine; a brake mechanism capable of braking the traveling wheel by an activation of an electric actuator; and a control device controlling the activation of the electric actuator, and the control device controls the electric actuator to bring the work vehicle into an auto-braking state in which the traveling wheel is maintained in a braked state when an automatic brake engagement condition is satisfied and to release braking of the traveling wheel in the auto-braking state when an automatic brake release condition is satisfied, the brake mechanism is coupled to a fore-and-aft advance/retreat rod, with a fore-and-aft direction defined as a longitudinal direction, the rod being capable of advancing and retreating in response to operation of a brake pedal, and switches between activation and deactivation of a brake in conjunction with a pulling operation by advancing and retreating the fore-and-aft advance/retreat rod, and an electric cylinder being the electric actuator is coupled to the fore-and-aft advance/retreat rod, and when the electric cylinder expands and contracts, the fore-and-aft advance/retreat rod is advanced and retreated to perform automatic brake engagement or automatic brake release regardless of the operation of the brake pedal, and the electric cylinder enables the brake to be held in an applied state.

### ADVANTAGEOUS EFFECTS OF INVENTION

According to the present invention, it is possible to provide a work vehicle in which a brake is applied by an auto-parking function at an appropriate timing so as to bring the vehicle into a hold state, thereby improving safety.

### BRIEF DESCRIPTION OF DRAWINGS

FIG. 1 is a left side view of a work vehicle.
FIG. 2 is a left side view of the work vehicle with a hood cover in an open position.
FIG. 3 is a perspective view of a main portion of the work vehicle with a part cut away.
FIG. 4 is a rear view of the work vehicle.
FIG. 5 is a plan view of rear wheels and a main portion of the work machine.
FIG. 6 is a left side view of the rear wheel and the main portion of the work machine.
FIG. 7 is a left side view of an electric motor for rear wheel and an electric motor for a work machine.
FIG. 8 is a perspective view of a main portion around a steering wheel.
FIG. 9 is a perspective view of a traveling vehicle body.
FIG. 10 is a perspective view of a steering post.
FIG. 11 is a left side view of a main portion of a brake mechanism that controls braking of traveling wheels.
FIG. 12 is a plan view of the main portion of the same.
FIG. 13 is a perspective view of a main portion around the brake mechanism.
FIG. 14 is a control block diagram of a controller that is a control device.
FIG. 15 is a list illustrating automatic brake engagement conditions of the controller.
FIG. 16 is a list illustrating automatic brake release conditions of the controller.
FIG. 17 is a flowchart illustrating the control of the controller in a charging mode.

### DESCRIPTION OF EMBODIMENTS

### <1. Basic Configuration of Work Vehicle>

First, a basic configuration of a work vehicle according to an embodiment of the present invention will be described.

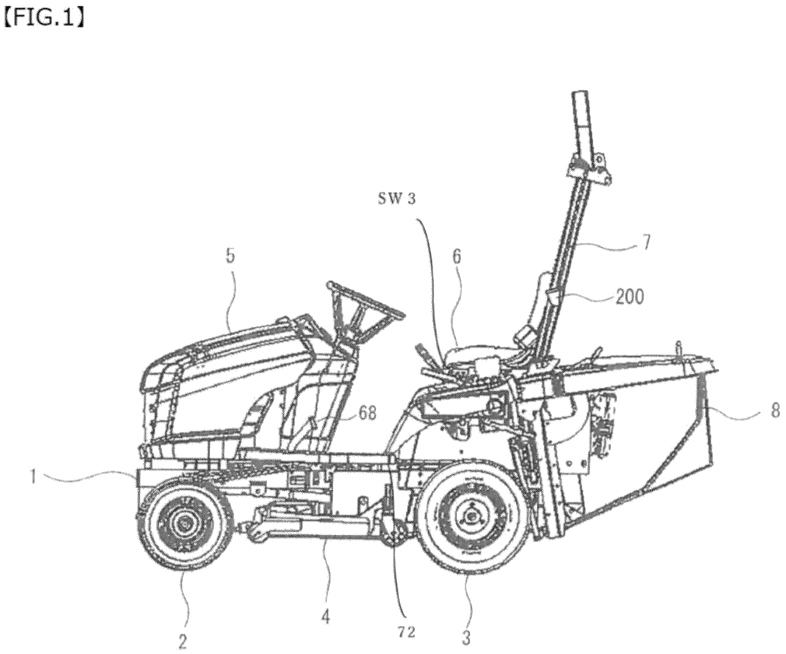

As illustrated in FIG. 1, a pair of right and left front wheels 2 are provided on a front portion of a traveling vehicle body 1 of a work vehicle such as a riding lawn mower, a pair of right and left rear wheels 3 are provided on a rear portion of the traveling vehicle body 1, and a work machine 4 for mowing lawn grass or the like is provided between the front wheels 2 and the rear wheels 3 on a lower side of the traveling vehicle body 1. Further, a hood portion 5 is provided at an upper front portion of the traveling vehicle body 1, an operator's station 6 in which an operator is seated is provided on a rear side of the hood portion 5, a safety frame (ROPS) 7 for protecting the operator is provided on a rear side of the operator's station 6, and a grass collection container 8 for storing lawn grass or the like mowed by the work machine 4 is provided at a lower portion of the safety frame 7.

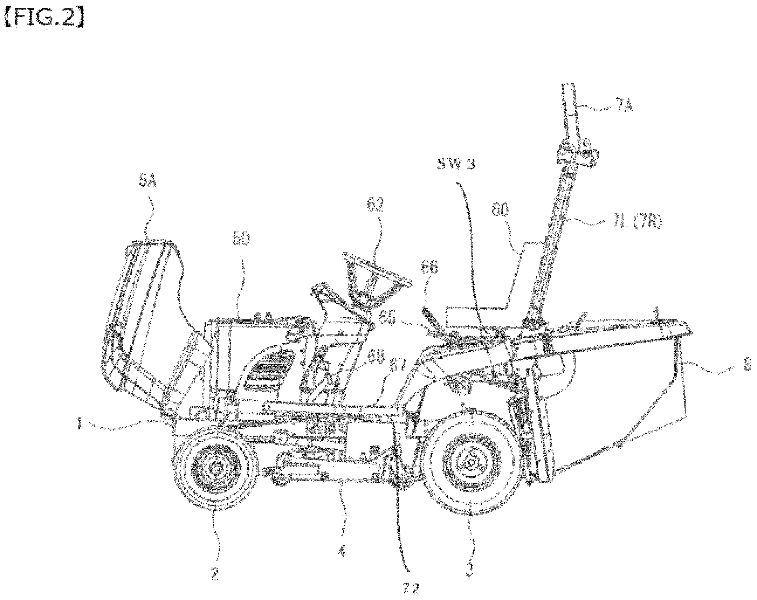

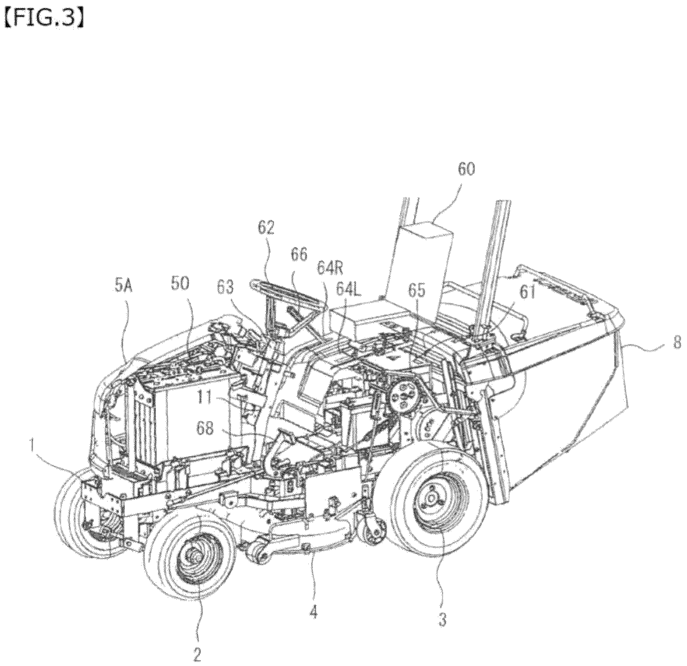

As illustrated in FIGS. 2 and 3, the hood portion 5 is provided with a battery 50 for storing electric power to be supplied to a traveling motor 30 for driving the rear wheels 3 as traveling wheels and a work machine motor 40 for driving the work machine 4, and the battery 50 is covered with a hood cover 5A. The hood cover 5A is supported by a support shaft (not illustrated) provided at a front portion of the traveling vehicle body 1 and extending in a lateral direction. Thus, a space formed in the hood portion 5 can be effectively utilized, and the difference in weight balance in a fore-and-aft direction of the work vehicle can be suppressed.

An operator's seat 60 is provided at a rear portion of the operator's station 6, and a steering wheel 62 is provided in front of the operator's seat 60. The steering wheel 62 is supported by an upper portion of a steering shaft 63 extending in a vertical direction, and the steering shaft 63 is supported by a steering post 11.

A left fender 64L on a left side of the operator's seat 60 is provided with a cleaner lever 65 for operating a cleaner (not illustrated) for forcibly conveying the mown grass remaining in a chute 46, which conveys the mown grass mowed by the work machine 4 to the grass collection container 8, to the grass collection container 8 and a storage case 90 for storing a charging cable 95 used for charging the battery 50 on a rear side of the cleaner lever 65. As a result, when the charged amount of the battery 50 becomes equal to or less than a predetermined amount, the work vehicle is not moved to a charging station, but is moved to a nearby warehouse or the like, and the battery 50 can be charged by connecting a household outlet provided in the warehouse or the like to a vehicle-mounted charger 80 (hereinafter, sometimes referred to as OBC 80), which is a so-called on board charger (OBC), via the charging cable 95. An input voltage of the vehicle-mounted charger 80 is formed to correspond to an AC voltage 100 to 240 V. A lifting lever 66 for lifting the work machine 4 is provided on a right fender 64R of the operator's seat 60.

A brake pedal 68 is provided on a left side of the steering post 11 of a floor 67 of the operator's station 6, and an accelerator pedal 69 for forward travel and rearward travel is provided on a right side of the steering post 11.

An electric component 61 (hereinafter, referred to as a BMS control device 61) that manages a battery management system (BMS) and controls a battery is provided below the operator's seat 60 of the operator's station 6. Thus, a space formed below the operator's seat 60 can be effectively utilized. Further, a seating detection sensor (seat switch) SW3 capable of detecting seating of an operator by detecting a load received by the operator's seat 60 is provided at a lower portion of the operator's seat 60.

The safety frame 7 is formed of a left supporting column portion 7L extending in the vertical direction, a right supporting column portion 7R extending in the vertical direction, and an inverted U-shaped coupling portion 7A connecting upper portions of the left supporting column portion 7L and the right supporting column portion 7R.

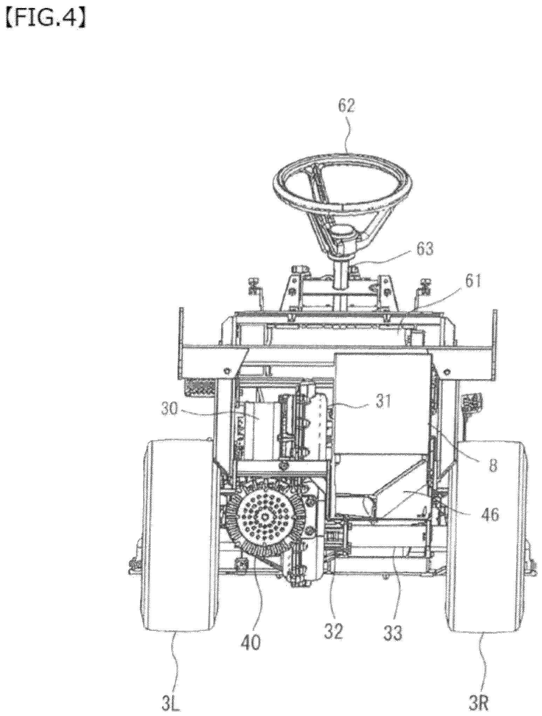

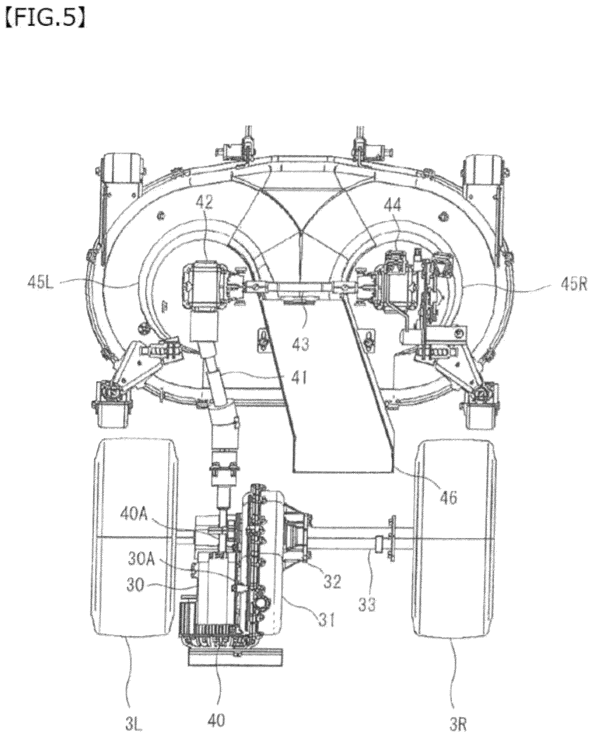

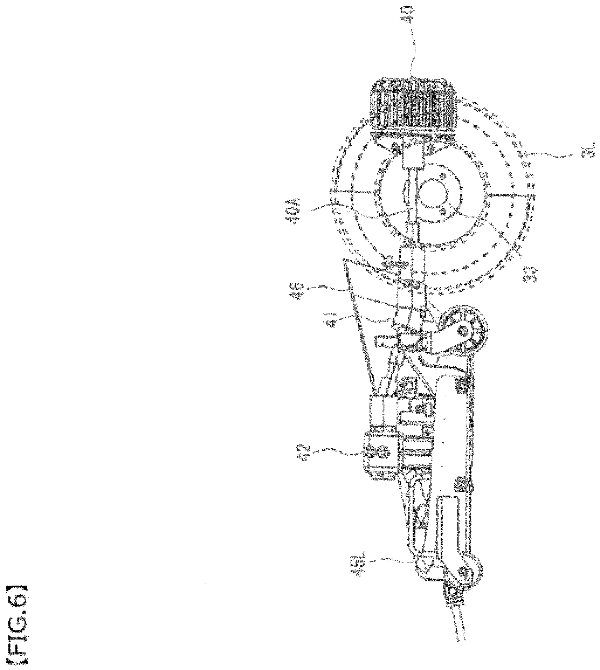

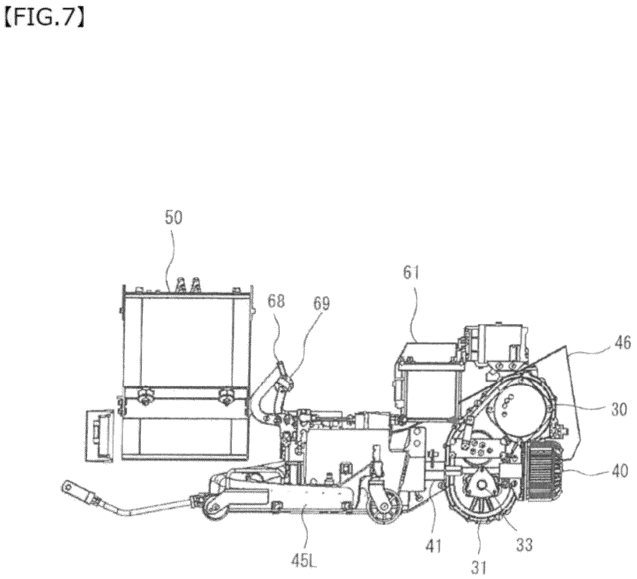

As illustrated in FIGS. 4 to 7, the traveling motor 30, which is an electric motor such as a synchronous motor or an induction motor operated by a three-phase AC voltage waveform for driving the rear wheels 3, is provided below the BMS control device 61. An output shaft 30A formed to extend in the lateral direction of the traveling motor 30 is coupled to an upper portion of a gearbox 31 that reduces the speed of an output rotation transmitted from the output shaft 30A to increase an output torque or reverse the rotation direction. The traveling motor 30 is provided at a position shifted to a left rear wheel 3L from the center in the lateral direction.

The output rotation increased or decreased in speed by the gearbox 31 is transmitted to a drive shaft 33 extending in the lateral direction via a differential gear 32 provided in a lower portion of the gearbox 31 and formed of a differential gear and related components. The output rotation transmitted to the drive shaft 33 is transmitted to the left rear wheel 3L and a right rear wheel 3R, which are supported at both ends of the drive shaft 33.

The work machine motor 40, which is an electric motor such as a synchronous motor or an induction motor operated by a three-phase AC voltage waveform for driving the work machine 4, is provided below the traveling motor 30. An output shaft 40A formed to extend in the fore-and-aft direction of the work machine motor 40 is coupled to a rear portion of a universal joint 41 provided to extend in the fore-and-aft direction.

Further, the output shaft 40A is provided above the drive shaft 33 so as to be orthogonal to the drive shaft 33. Thus, a space formed below the traveling motor 30 can be effectively utilized. In addition, since a transmission path between the work machine motor 40 and the work machine 4 can be shortened, the output rotation of the work machine motor 40 can be efficiently transmitted to the work machine 4. The work machine motor 40 is provided at a position shifted to the left rear wheel 3L from the center in the lateral direction.

A front portion of the universal joint 41 is coupled to a gearbox 42 that reduces the speed of an output rotation transmitted from the universal joint 41 to increase an output torque. The output rotation transmitted to the gearbox 42 is transmitted to a left cutting blade (not illustrated) provided on a left discharge passage 45L of the work machine 4 via an output shaft formed to extend in the vertical direction of the gearbox 42.

A coupling member 43 extending in the lateral direction is coupled to a right portion of the gearbox 42, and a right portion of the coupling member 43 is coupled to a gearbox 44. An output rotation transmitted to the gearbox 44 is transmitted to a right cutting blade (not illustrated) provided in a right discharge passage 45R of the work machine 4 via an output shaft formed to extend in the vertical direction of the gearbox 44.

Note that rotational speeds of the output rotations of the output shaft of the gearbox 42 and the output shaft of the gearbox 44 are the same, and the rotation directions are opposite, that is, in a plan view, the output shaft of the gearbox 42 rotates clockwise, and the output shaft of the gearbox 44 rotates counterclockwise.

The rotational speed of the traveling motor 30 can be increased or decreased via a throttle lever 47, which is a power setting device, provided on a left side of the steering wheel 62. When the throttle lever 47 is placed in a neutral position, the output rotation of the output rotation of the traveling motor 30 becomes zero. When the throttle lever 47 is shifted from a neutral position to a forwardly inclined position, the output rotation of the traveling motor 30 is increased or decreased in accordance with an inclination angle of the forwardly inclined position. When a shift lever is shifted from the neutral position to a rearwardly inclined position, the output rotation of the traveling motor 30 is increased or decreased in accordance with an inclination angle of the rearwardly inclined position, so that the rotation direction of the output rotation of the traveling motor 30 is reversed.

Conveying-out ports of the left discharge passage 45L and the right discharge passage 45R are coupled to a conveying-in port of a chute 46 for conveying the mowed lawn grass or the like to the grass collection container 8. A conveying-out port of the chute 46 is coupled to a conveying-in port of the grass collection container 8.

In a plan view, a front portion of the chute 46 is provided on a right side of the universal joint 41, and a rear portion of the chute 46 is provided on a right side of the gearbox 31. In a rear view, the chute 46 and the grass collection container 8 are provided between the gearbox 31 and the right rear wheel 3R. Thus, the large chute 46 can be provided in a space formed on the right side of the universal joint 41 and the gearbox 31, and the lawn grass or the like mowed by the work machine 4 can be efficiently conveyed to the grass collection container 8.

In a side view, an upper wall of the chute 46 is formed to be inclined rearward and upward, and the rear portion of the chute 46 is provided to extend downward below the BMS control device 61. Thus, the rear portion of the chute 46 can be enlarged to prevent the inside of the chute 46 from being clogged with the lawn grass or the like.

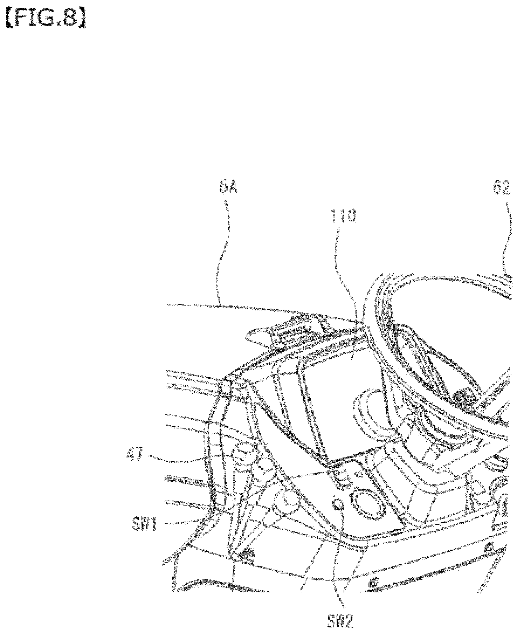

FIG. 8 is a perspective view of main portions around the steering wheel 62.

As illustrated in FIG. 8, a liquid crystal display device 110 is provided in front of the steering wheel 62, and various kinds of information can be displayed. A key switch SW1 and a charging switch SW2 are provided to the left of the steering wheel 62.

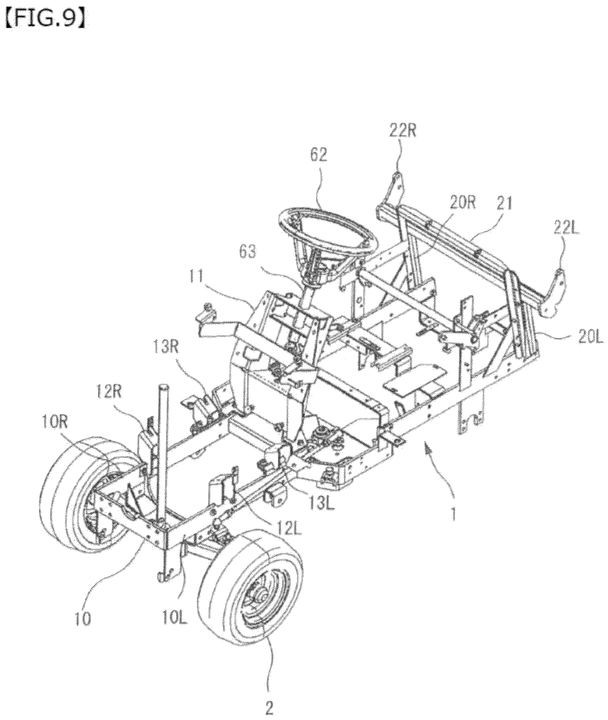

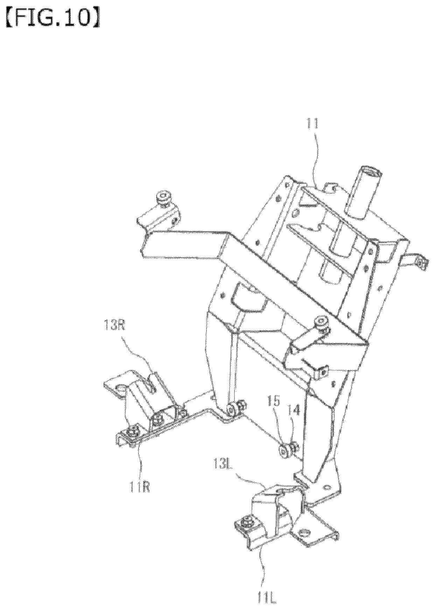

As illustrated in FIGS. 9 and 10, the traveling vehicle body 1 includes a traveling vehicle main body 10 for supporting the front wheels 2 and the rear wheels 3, and the steering post 11 for supporting the steering shaft 63.

A left fore-and-aft frame 10L and a right fore-and-aft frame 10R extending in the fore-and-aft direction are formed on the traveling vehicle main body 10, and a left coupling portion 11L and a right coupling portion 11R extending forward are formed on a lower portion of the steering post 11.

The left coupling portion 11L is fixed to the left fore-and-aft frame 10L by a fastening means such as a bolt, and the right coupling portion 11R is fixed to the right fore-and-aft frame 10R by a fastening means such as a bolt to be integrated, thereby forming the traveling vehicle body 1.

A left support member 12L is provided at a front portion of the left fore-and-aft frame 10L, and a coupling portion of the left support member 12L is formed to be inclined upward to the left. Further, a right support member 12R is provided at a front portion of the right fore-and-aft frame 10R, and a coupling portion of the right support member 12R is formed to be inclined upward to the right. The left support member 12L and the right support member 12R are formed from channel steel.

A left support member 13L is provided at a front portion of the left coupling portion 11L, and a coupling portion of the left support member 13L is formed to be inclined upward to the left. Further, a right support member 13R is provided at a front portion of the right coupling portion 11R, and a coupling portion of the right support member 12R is formed to be inclined upward to the right. The left support member 13L and the right support member 13R are formed from channel steel.

At the lower portion of the steering post 11, a projecting portion 14 is formed so as to project forward at a predetermined interval in the lateral direction, and a buffer member 15 formed from a rubber member or the like is provided at a distal end of the projecting portion 14.

A left vertical frame 20L extending upward is provided at a rear portion of the left fore-and-aft frame 10L, a right vertical frame 20R extending upward is provided at a rear portion of the right fore-and-aft frame 10R, and upper portions of the left vertical frame 20L and the right vertical frame 20R are coupled to a lateral frame 21 extending in the lateral direction.

A left coupling portion 22L for supporting a lower portion of the left supporting column portion 7L of the safety frame 7 is provided on a left portion of the lateral frame 21, and a right coupling portion 22R for supporting a lower portion of the right supporting column portion 7R of the safety frame 7 is provided on a right portion of the lateral frame 21.

### <2. Configuration of Brake Mechanism>

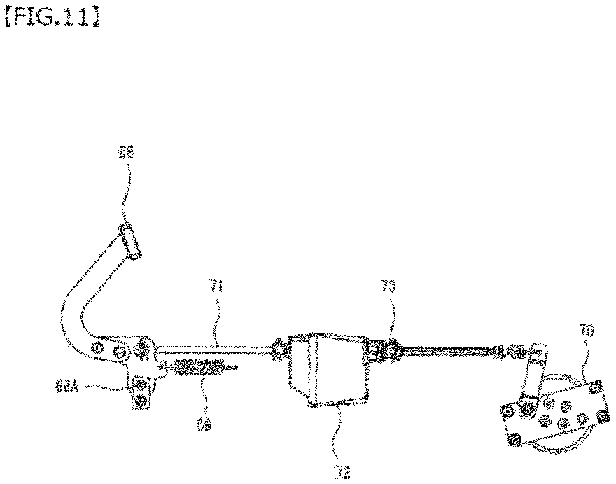

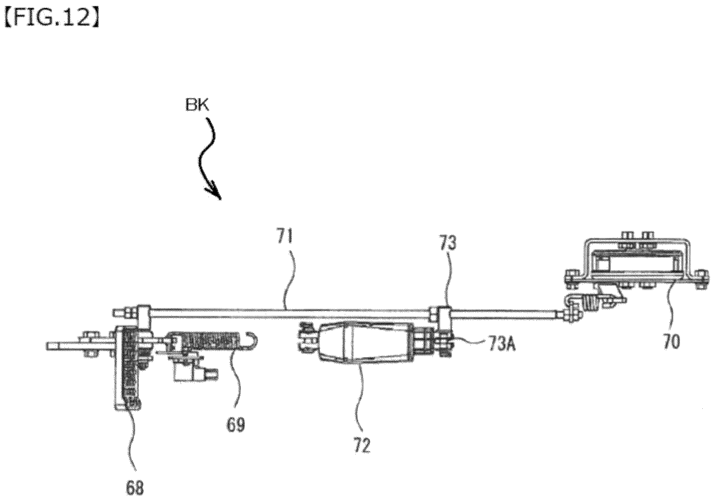

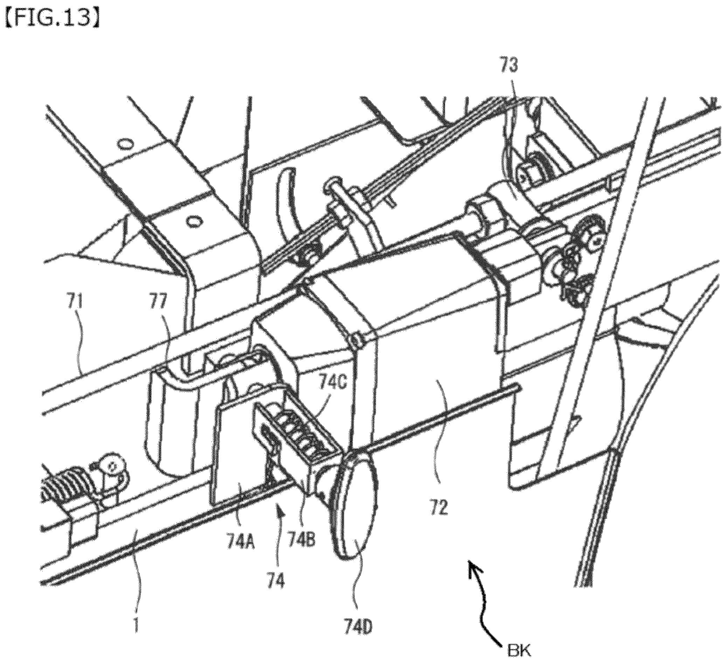

FIG. 11 is a left side view of a main portion of a brake mechanism that controls braking of the traveling wheels (rear wheels 3), and FIG. 12 is a plan view of the main portion of the same. Further, FIG. 13 is a perspective view of a main portion around the brake mechanism.

As illustrated in FIGS. 11 and 12, a brake 70 for braking the rotation of the rear wheels 3 caused by the output from the gearbox 31 is coupled to a fore-and-aft advance/retreat rod 71 configured to advance and retreat in response to operation of the brake pedal 68, with a fore-and-aft direction defined as a longitudinal direction. Activation and deactivation of the brake 70 are switched in conjunction with a pulling operation by advancing and retreating the fore-and-aft advance/retreat rod 71.

An electric cylinder 72 is coupled to the fore-and-aft advance/retreat rod 71, and when the electric cylinder 72 expands and contracts, the fore-and-aft advance/retreat rod 71 is configured to advance and retreat regardless of the operation of the brake pedal 68. The expansion and contraction of the electric cylinder 72 is controlled by a controller CO which is a control device.

More specifically, when an operator depresses the brake pedal 68, the brake pedal 68 rotates counterclockwise on a paper surface about a support shaft 68A extending in the lateral direction, and moves the fore-and-aft advance/retreat rod 71 forward. As a result, the brake 70 is activated and the rear wheels 3 are braked. In other words, the brake 70 is applied.

Further, when the electric cylinder 72 is controlled to contract by the controller CO (contracted state), the fore-and-aft advance/retreat rod 71 is moved forward. As a result, the brake 70 is activated and the rear wheels 3 are braked. As a result, the electric cylinder 72 is maintained in the contraction state, so that a hold state can be achieved with the brake 70 applied. On the other hand, when the electric cylinder 72 is controlled by the controller CO so as to be extended (extended state), the fore-and-aft advance/retreat rod 71 is moved rearward. As a result, the activation of the brake 70 is released. As a result, the braking of the rear wheels 3 is released, and the hold state is released.

As illustrated in FIG. 12, a rear portion of the electric cylinder 72 is coupled to the fore-and-aft advance/retreat rod 71 via a coupling member 73 extending in the lateral direction. The rear portion of the electric cylinder 72 is rotatably fixed to a cylindrical pin 73A formed on a left portion of the coupling member 73.

A piston-side front portion of the electric cylinder 72 is coupled to a fixing member 77 erected on an upper surface of the traveling vehicle body 1 via a cylindrical pin 74C extending in the lateral direction of an attaching/detaching device 74. The front portion of the electric cylinder 72 is rotatably fixed to the pin 74C.

As illustrated in FIG. 13, the attaching/detaching device 74 includes a support plate 74A erected on the upper surface of the traveling vehicle body 1, a support main body 74B having a substantially U-shape and extending leftward from a left surface of the support plate 74A, a pin 74C provided inside the support main body 74B and extending in the lateral direction, and a handle 74D provided on a left portion of the pin 74C, and the electric cylinder 72 can be attached to and detached from the traveling vehicle body 1 by operating the handle 74D.

### <3. Configuration of Control Device>

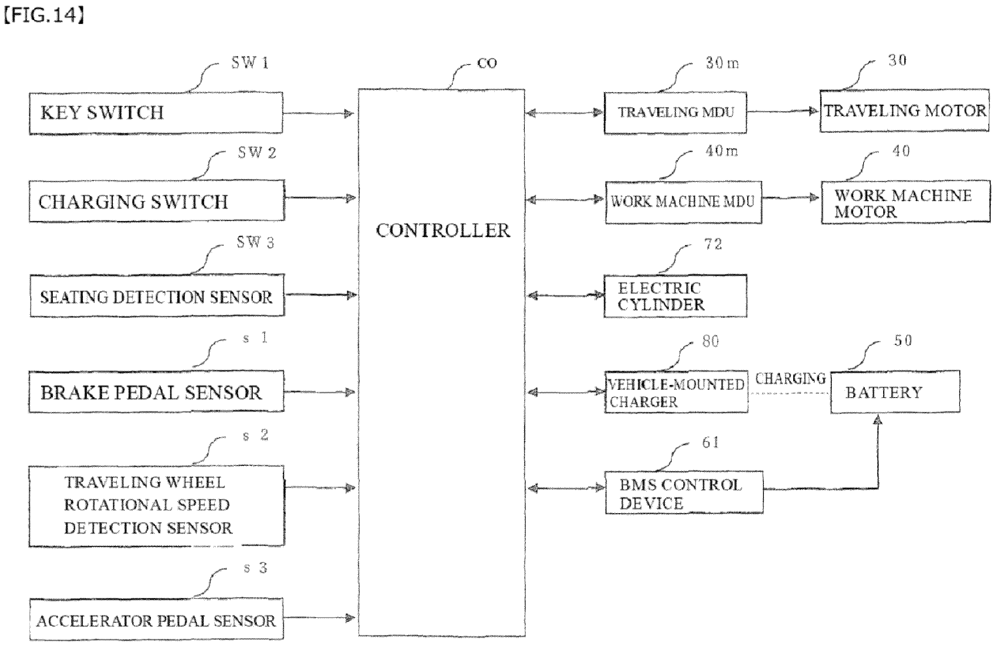

FIG. 14 is a control block diagram of the controller CO which is a control device.

The controller CO is a so-called vehicle control unit (VCU), includes an electronic control unit (ECU), and can perform various types of control.

A key switch SW1, a charging switch SW2, a seating detection sensor SW3, a brake pedal sensor s1, a traveling wheel rotational speed detection sensor s2, and an accelerator pedal sensor s3 are connected to an input side of the controller CO, and detection information thereof can be acquired.

Further, the controller CO is connected to a traveling MDU (30m), a work machine MDU (40m), the electric cylinder 72, the vehicle-mounted charger 80, and the BMS control device 61, and can transmit and receive various kinds of information to and from these connected devices.

The key switch SW1 can be switched to three operation positions of an OFF position, an ACC position, and an ON position by a turning operation. When the key switch SW1 is in the OFF position, the controller CO is supplied with a minimum current required for maintaining the function. At this time, an information processor such as a CPU of the controller CO keeps operating, and is configured to determine the operation position of the key switch SW1 and to perform minimum necessary processing. At this time, power required for driving is not supplied to the traveling motor 30 and the work machine motor 40.

When the key switch SW1 is in the ACC position, power required for normal activation is supplied to the controller CO, and the liquid crystal display device 110 and the like are activated. On the other hand, since the power required for driving is not supplied to the traveling motor 30 and the work machine motor 40, for example, even if the accelerator pedal 69 is depressed, the rear wheels 3 do not rotate, and the work vehicle does not start to move.

When the key switch SW1 is in the ON position, the power required for driving is supplied to the traveling motor 30 and the work machine motor 40, and the rear wheels 3 and the work machine 4 are in a drivable state, so that the work vehicle is in a state in which work travel is enabled.

The charging switch SW2 is configured as a momentary switch that can be turned on and off. When the charging switch SW2 is turned on, the battery 50 can be charged from an external power supply. When the charging switch SW2 is turned on, the controller CO executes a charging mode to be described below.

In addition, the controller CO can acquire information regarding seating on the operator's seat 60 by the seating detection sensor SW3, a depression amount of the brake pedal 68 by the brake pedal sensor s1, a rotational speed of the rear wheel 3, which serves as a traveling wheel, by the traveling wheel rotational speed detection sensor s2, and a depression amount of the accelerator pedal 69 by the accelerator pedal sensor s3. These sensors are provided at appropriate positions of the work vehicle.

The traveling MDU 30m is an inverter control device, and includes an inverter function for controlling the rotational speed of the traveling motor 30 and a simple cpu (a relay circuit for inverter) for controlling the inverter function. The MDU is an abbreviation of a motor drive unit. The traveling MDU 40m controls ON/OFF of the traveling motor 30 by controlling the rotational speed of the inverter, and also functions to output an activation signal of a simple brake included in the traveling motor 30 when the rotation of the inverter is turned off. Further, by turning on and off an MDU signal relay, power to the simple cpu of the inverter of the traveling MDU 30m is turned on and off.

Like the traveling MDU 30m, the work machine MDU 40m is an inverter control device, and includes an inverter function for controlling the rotational speed of the work machine motor 40 and a simple cpu (a relay circuit for inverter) for controlling the inverter function. The work machine MDU 40m controls ON/OFF of the work machine motor 40 by activation the rotational speed of the inverter, and also functions to output an operation signal of a simple brake included in the work machine motor 40 when the rotation of the inverter is turned off. Further, by turning on and off an MDU signal relay L1, power to the simple cpu of the inverter of the work machine MDU 40m is turned on and off.

The BMS control device 61 is a control device that functions to control the battery 50. In particular, the BMS control device 61 controls supply of electric power from the battery 50 by means of on/off control of a relay in a battery control circuit (not illustrated).

The controller CO is configured to be able to control the expansion and contraction of the electric cylinder 72 by transmitting, to the electric cylinder 72, a contraction signal commanding contraction and an expansion signal commending expansion, and is also able to acquire a feedback signal indicating the state of the expansion and contraction of the electric cylinder 72.

### <4. Control Example of Auto-Parking Function (Automatic Brake Engagement Conditions)>

The controller CO configured as described above has an auto-parking function of automatically braking the rear wheels 3, which serve as traveling wheels, or releasing the braking, by controlling the expansion and contraction of the electric cylinder 72 according to a predetermined condition.

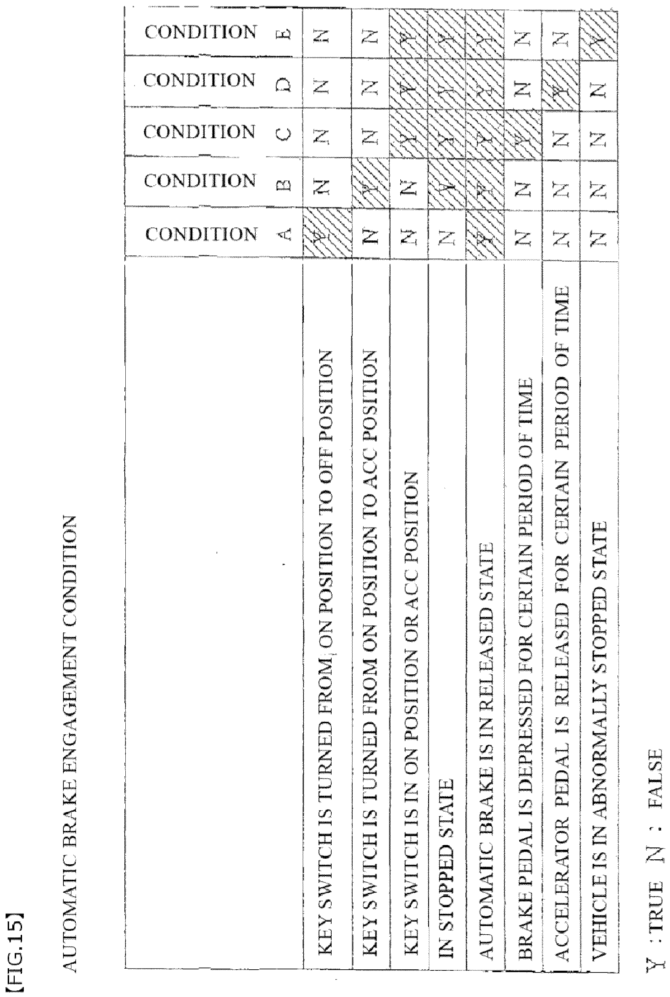

FIG. 15 is a table illustrating automatic brake engagement conditions of the controller CO.

In the controller CO, the conditions listed in FIG. 15 are set as conditions for controlling the contraction of the electric cylinder 72 and automatically braking the rear wheels 3 (hereinafter referred to as "automatic brake engagement conditions"). That is, when any of conditions A to E illustrated in FIG. 15 is satisfied, the work vehicle is brought into a hold state (auto-braking state) by automatically applying the brake. At this time, the brake pedal 68 is fixed at the depressed position. Further, in the auto-braking state, the fact is informed by a means such as icon lighting on the liquid crystal display device 110.

### (1) Condition A

When the key switch SW1 is turned off (operated to an OFF position), a condition is that the work vehicle is in a stopped state (i.e., a state in which the traveling wheel rotational speed detection sensor s2 does not detect the rotation of the traveling wheels. Alternatively, it may be considered that the vehicle is stopped at a detection value 10 rpm or less). With such a configuration, when power of the work vehicle is turned off (i.e., the key switch SW1 is turned off), the traveling wheels are automatically braked, preventing an operator from forgetting to apply the brake when parking and improving safety.

### (2) Condition B

When the key switch SW1 is operated from the ON position to the ACC position, a condition is that the work vehicle is in a stopped state and the automatic brake is in a released state (a state in which the electric cylinder 72 is extended and the rear wheels 3 are not braked). With such a configuration, when the key switch SW1 is in the ACC position, the power of the work vehicle is turned on, but the vehicle is unable to travel and drive the work machine 4, and therefore, the traveling wheels can be automatically braked to maintain the vehicle in a stopped position and improve safety.

### (3) Condition C

A condition is that the key switch SW1 is in the ON position or the ACC position, the work vehicle is in a stopped state, the automatic brake is in a released state, and the brake pedal 68 is depressed for certain period of time (for example, 1 second). With such a configuration, since the brake can be automatically brought into a hold state by the operation of the brake pedal 68, convenience can be improved by a quick and simple operation. In a case where the key switch SW1 is configured not to have the ACC position, the condition can be that the key switch SW1 is in the ON position.

### (4) Condition D

A condition is that the key switch SW1 is in the ON position or the ACC position, the work vehicle is in a stopped state, and the automatic brake is in a released state (a state in which the electric cylinder 72 is not controlled to extend and the rear wheels 3 are not braked), and the accelerator pedal 69 is released for a certain period of time (for example, 1 second). With such a configuration, when the accelerator pedal 69 is released for a certain period of time regardless of the operation of the operator, the brake can be automatically applied to bring the vehicle into a hold state when the work vehicle is stopped. Therefore, safety can be improved. In a case where the key switch SW1 is configured not to have the ACC position, the condition can be that the key switch SW1 is in the ON position.

### (5) Condition E

A condition is that the key switch SW1 is in the ON position or the ACC position, the work vehicle is in a stopped state, the automatic brake is in a released state, and the work vehicle is in an abnormally stopped state (a state in which an abnormality detection sensor (not illustrated) detects an abnormality). According to such a configuration, since the brake can be automatically applied to bring the vehicle into a hold state at the time of abnormality, safety can be improved. In a case where the key switch SW1 is configured not to have the ACC position, the condition can be that the key switch SW1 is in the ON position.

### (6) Automatic brake engagement condition based on detection result of seating detection sensor SW3

The controller CO can also be configured to automatically enter the auto-braking state when the operator leaves the operator's seat 60, that is, when the seating detection sensor SW3 changes from a detection state to a non-detection state. Thus, it is possible to prevent the operator from forgetting to apply the brake when the operator leaves the seat, and to prevent the work vehicle from rolling downhill even when the operator leaves the seat on a slope, thereby improving safety. At this time, when leaving the seat is detected by the seating detection sensor SW3, the controller CO stops the traveling motor 30 and the work machine motor 40 in a case where the operator leaves the seat for a certain period of time (for example, continuously for several seconds), and it is preferable to enter the auto-braking state at a timing when the traveling motor 30 stops from the viewpoint of safety. By automatically stopping the traveling motor 30 and the work machine motor 40, it is possible to shift to the auto-braking state more safely. Furthermore, safety can be further improved by adopting a configuration in which the work machine motor 40 does not restart unless a PTO switch (not illustrated) is returned to OFF and then turned ON again.

### <5. Control Example of Auto-Parking Function (Automatic Brake Release Conditions)>

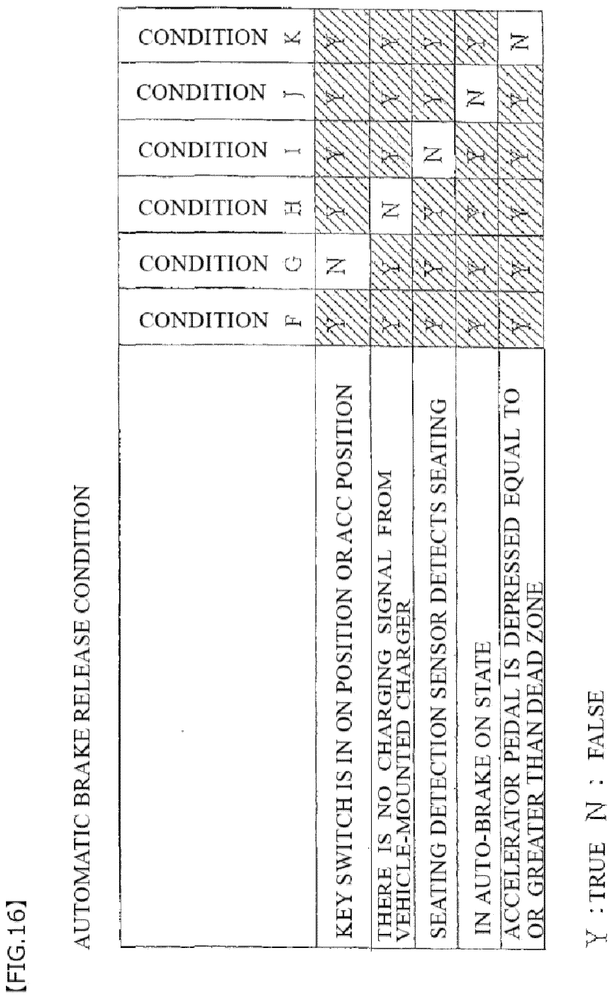

FIG. 16 is a table illustrating automatic brake release conditions of the controller CO.

Herein, the automatic brake release condition refers to a condition for automatically releasing the auto-braking state, and when any of conditions F to K illustrated in FIG. 16 is satisfied, the controller CO of the work vehicle controls the electric cylinder 72 to extend, and releases the braking of the rear wheels 3 which are traveling wheels.

### (1) Condition F

A condition is that the key switch SW1 is in the ON position or the ACC position, there is no charging signal (signal indicating that charging is in progress) from the vehicle-mounted charger 80, the seating detection sensor SW3 detects that an operator is seated, the vehicle is in the auto-braking state, and the accelerator pedal 69 is depressed at or beyond the dead zone. According to such a configuration, it is possible to automatically release the auto-braking state regardless of the operation of the operator, and it is also possible to prevent brake dragging due to forgetting to release the brake. In addition, when there is a charging signal from the vehicle-mounted charger 80, safety can be improved by not releasing the auto-braking state. This is because it is dangerous to travel in a state in which a charging cord is plugged in. Further, since detection of the operator being seated by the seating detection sensor SW3 is a condition, safety can be further improved by allowing release when the operator is seated. Further, by setting the condition that the accelerator pedal 69 is depressed at or beyond the dead zone, the auto-braking state is released at a timing when the traveling motor 30 starts to rotate, whereby the vehicle is suitably prevented from rolling down during a hill start. At this time, in a case where the accelerator pedal 69 is configured to include a forward pedal and a reverse pedal, it is preferable that the condition be that a pedal opening of one of the forward pedal and the reverse pedal is at or beyond the dead zone. In a case where the key switch SW1 is configured not to have the ACC position, the condition can be that the key switch SW1 is in the ON position.

### (2) Conditions G to K

According to the conditions G to K, even when any one of the following conditions is false: the key switch SW1 is in the ON position or the ACC position; there is no charging signal from the vehicle-mounted charger 80; the seating detection sensor SW3 detects that the operator is seated; the vehicle is in the auto-braking state; and the accelerator pedal 69 is depressed at or beyond the dead zone, the auto-braking state is released, thereby improving convenience. In addition, as described above, by including a detection result of the seating detection sensor SW3 (whether or not the operator is seated) in the automatic brake engagement conditions and the automatic brake release conditions, it is possible to control the engagement and release of the automatic brake in accordance with the operator's seating status, which is suitable for improving safety. In a case where the key switch SW1 is configured not to have the ACC position, the condition can be that the key switch SW1 is in the ON position.

### <6. Control Example of Charging Mode>

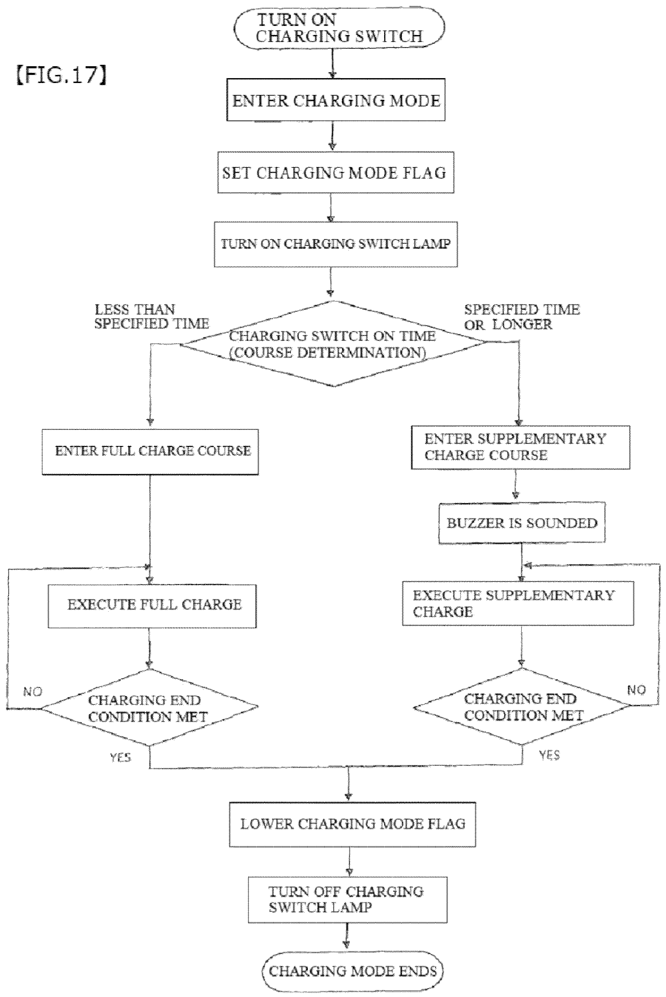

FIG. 17 is a flowchart illustrating the control of the controller CO in a charging mode.

As illustrated in FIG. 17, the control of the controller CO in the charging mode is configured as follows.

The charging mode is started by pressing the charging switch SW2. Thus, since charging is not started unless the pressing operation is performed, safety is improved. The charging switch SW2 is constituted by a momentary switch, and a course of the charging mode can be selected according to a manner in which the switch is pressed. A specified time in the figure is, for example, 3 seconds. When the charging switch SW3 is pressed while power of the work machine 4 is off, a charging mode flag is set in the controller CO, and the charging mode is maintained even if the charging switch SW2 is not continuously pressed. In the charging mode, a charging switch lamp (not illustrated) is turned on so that an operator can recognize the charging mode. When the charging switch SW2 is pressed during the charging mode, the charging mode flag is cleared and the charging mode is terminated.

The charging mode includes a full charge course and a supplementary charge course, and the selected course is determined by a pressing time of the charging switch SW2. The supplementary charge course is configured such that the battery 50 is not fully charged and can be charged only up to a specified battery remaining capacity. That is, when the battery is charged to a specified battery remaining capacity, the charging mode flag is cleared and the charging mode is terminated. Thus, deterioration of the battery 50 can be prevented. In the full charge course, when the battery 50 is charged to full charge, the charging mode flag is cleared and the charging mode is terminated. When the supplementary charge course is selected, a buzzer is sounded so that the operator can discriminate the supplementary charge course from the full charge course.

The embodiment of the present invention has been described above. The present invention is not limited to the embodiment described above. Needless to say, appropriate modifications are possible within the scope of the technical idea.

## Claims

1. A work vehicle comprising:
a traveling wheel and a work machine;
a brake mechanism capable of braking the traveling wheel by an activation of an electric actuator; and a control device controlling the activation of the electric actuator, wherein
the control device controls the electric actuator to bring the work vehicle into an auto-braking state in which the traveling wheel is maintained in a braked state when an automatic brake engagement condition is satisfied and
to release braking of the traveling wheel in the auto-braking state when an automatic brake release condition is satisfied,
the brake mechanism is coupled to a fore-and-aft advance/retreat rod, with a fore-and-aft direction defined as a longitudinal direction, the rod being capable of advancing and retreating in response to operation of a brake pedal, and switches between activation and deactivation of a brake in conjunction with a pulling operation by advancing and retreating the fore-and-aft advance/retreat rod, and
an electric cylinder being the electric actuator is coupled to the fore-and-aft advance/retreat rod, and when the electric cylinder expands and contracts, the fore-and-aft advance/retreat rod is advanced and retreated to perform automatic brake engagement or automatic brake release regardless of the operation of the brake pedal, and the electric cylinder enables the brake to be held in an applied state.

2. The work vehicle according to claim 1, comprising a seating detection sensor detecting seating on an operator's seat and transmitting a detection result to the control device, wherein
the automatic brake engagement condition includes a condition that the seating detection sensor is changed from a detection state to a non-detection state,
the automatic brake release condition includes a condition that a seating detection sensor is in a detection state, and
the control device stops a traveling motor that rotates the traveling wheel and a work machine motor that drives the work machine when a seating detection sensor is in a non-detection state for a certain period of time, and then enters the auto-braking state.

3. The work vehicle according to claim 1, wherein
the control device is connected to a key switch, a traveling wheel rotational speed detection sensor, and an accelerator pedal sensor, for enabling transmission of various kinds of information, the key switch enabling driving of a traveling motor that rotates the traveling wheel, the traveling wheel rotational speed detection sensor detecting a rotational speed of the traveling wheel, the accelerator pedal sensor detecting a depression amount of an accelerator pedal, and
the automatic brake engagement condition is a condition that the key switch is at an operation position at which the traveling motor can be driven, the traveling wheel rotational speed detection sensor is in a state of not detecting a rotational speed of the traveling wheel, and the accelerator pedal is released for a certain period of time.

4. The work vehicle according to claim 1, wherein
the control device is connected to a key switch and an accelerator pedal senso, for enabling transmission of various kinds of information, the key switch driving a traveling motor that rotates the traveling wheel, the accelerator pedal sensor detecting a depression amount of an accelerator pedal, and
the automatic brake release condition is a condition that the key switch is at an operation position at which the traveling motor can be driven and the accelerator pedal is depressed at or beyond a dead zone.
